# FASCICULE DE BREVET EUROPEEN

(11) **EP 3 880 594 B1**
(45) Date de publication et mention de la délivrance du brevet: **12.07.2023**
(21) Numéro de dépôt: 19832431.1
(22) Date de dépôt: 13.11.2019
(51) Int. Cl.: B65H 19/30, B65H 19/12, B29D 30/00, B29D 30/30

(54) **PROCEDE ET INSTALLATION D'ALIMENTATION EN PRODUITS ELASTOMERIQUES**
VERFAHREN UND ANLAGE ZUR BEREITSTELLUNG ELASTOMERER PRODUKTE
METHOD AND FACILITY FOR SUPPLYING ELASTOMERIC PRODUCTS

(30) Priorité: 15.11.2018 FR 1860542
(43) Date de publication de la demande: 22.09.2021
(73) Titulaire: COMPAGNIE GENERALE DES ETABLISSEMENTS MICHELIN, 63040 Clermont-Ferrand (FR)
(72) Inventeur: DETTORRE, Jean-Marie, 63040 CLERMONT-FERRAND CEDEX 9 (FR); JAUNET, Nicolas, 63040 CLERMONT-FERRAND CEDEX 9 (FR); QUERAUD, Hervé, 63040 CLERMONT-FERRAND CEDEX 9 (FR); RAVAT, Stéphane, 63040 CLERMONT-FERRAND CEDEX 9 (FR)
(74) Mandataire: Redouté, Gilles Pierre
(86) Numéro de dépôt international: PCT/FR2019/052695
(87) Numéro de publication internationale: WO 2020/099782

(56) Documents cités:
- US-A1- 2015 343 730

## Description

La présente invention se rapporte au domaine de la fabrication d'ébauches de pneumatiques et, plus précisément, à un procédé et à une installation d'alimentation en produits élastomériques de machines de fabrication d'ébauches de pneumatique.

Les produits élastomériques employés dans la fabrication d'ébauches de pneumatiques, prennent généralement la forme de nappes ou de bandes continues, éventuellement renforcées, et sont disposés sur un support antiadhésif aussi appelé intercalaire. Chaque ensemble formé par un intercalaire et un produit est enroulé sur une bobine durant le stockage et le transport du produit.

Une machine de fabrication d'ébauches de pneumatique comprend généralement un tambour, des postes de pose et des postes d'alimentation. Les produits élastomériques sont posés circonférentiellement sur le tambour à l'aide du poste de pose afin de former une ébauche de pneumatique. Chaque poste de pose tire un produit élastomérique depuis un poste d'alimentation. Le poste d'alimentation déroule l'ensemble formé par l'intercalaire et le produit de la bobine tout en retirant l'intercalaire, alimentant ainsi en produit la machine de fabrication d'ébauche de pneumatiques. Chaque poste d'alimentation comprend par conséquent un dévidoir sur lequel une bobine est chargée, le dévidoir permettant au produit d'être déroulé de la bobine. Cependant, le changement d'une bobine vide par une bobine pleine nécessite l'arrêt des opérations de pose d'un produit sur le tambour, ce qui diminue la productivité de la machine. Une installation d'alimentation en produit élastomérique est divulguée par US 2015/343730 A1, qui représente l'état de la technique le plus proche des revendications indépendantes 1 et 9, et divulgue les caractéristiques techniques du préambule de la revendication indépendante 9.

Le changement d'une bobine est généralement réalisé par un opérateur. Tout d'abord, le dévidoir appartenant au poste d'alimentation ré-enroule l'intercalaire précédemment déroulé avec le produit sur la bobine. Ensuite, l'opérateur évacue la bobine du poste d'alimentation de la machine et y introduit une nouvelle bobine. L'extrémité de l'ensemble formé par le produit et l'intercalaire est déroulée de la nouvelle bobine. L'extrémité du produit est séparée de l'extrémité de l'intercalaire, et aboutée avec l'extrémité résiduelle d'un précédent produit alimentant la machine, tandis que l'extrémité de l'intercalaire est enroulée sur un bobinot du poste d'alimentation.

Afin d'éviter l'arrêt des opérations de pose pendant le changement d'une bobine, on connait une machine de fabrication d'ébauche de pneumatique comprenant, en aval du poste d'alimentation et en amont du poste de pose dans le sens de tirage du produit, un stock tampon qui consiste en un circuit le long duquel le produit est tiré et visant à rallonger le parcours du produit. Le stock tampon contient ainsi une quantité de produit suffisante pour alimenter le poste de pose et lui permettre d'effectuer plusieurs opérations de pose tout en permettant le changement de la bobine. Toutefois, les missions de changement de bobines peuvent s'avérer plus longues qu'initialement prévues, notamment lorsque plusieurs instructions de mission de changement d'une bobine parviennent simultanément à l'opérateur, ce qui occasionne, là encore, l'arrêt des opérations de pose.

Un objectif de l'invention est de remédier aux inconvénients de l'état de la technique et d'apporter une solution originale, automatisée et sûre permettant d'améliorer l'ergonomie et la flexibilité d'une installation d'alimentation. Un autre objectif de l'invention est de diminuer le temps de changement d'une bobine sans arrêter les opérations de pose d'un produit, tout en limitant la quantité de produit stockée dans le stock tampon de la machine.

Cet objectif est atteint par l'invention qui propose suivant la revendication 1 un procédé d'alimentation en produits élastomériques de machines de fabrication d'ébauches de pneumatiques au moyen d'une installation d'alimentation, chaque produit étant disposé sur un support antiadhésif, l'ensemble formé par le produit et le support antiadhésif étant enroulé sur une bobine, ladite installation comprenant un organe de chargement et au moins un organe de transfert comportant un dévidoir, le procédé **étant caractérisé en ce que** l'installation d'alimentation comprend un poste de préparation, ledit poste de préparation comprenant un bras manipulateur apte à manipuler le produit et le support antiadhésif, et au moins un moteur apte à entraîner en rotation la bobine chargée sur le dévidoir, le poste de préparation et le dévidoir étant distincts de la machine de fabrication d'ébauches de pneumatiques, le procédé comprenant les opérations successives suivantes :
charger la bobine sur le dévidoir à l'aide de l'organe de chargement,
positionner l'extrémité de l'ensemble enroulé sur la bobine à l'aide du moteur du poste de préparation,
agencer l'extrémité du produit et l'extrémité du support antiadhésif de manière à ce que l'extrémité du produit soit disposée sur un présentoir du dévidoir et à ce que l'extrémité du support antiadhésif soit enroulée sur un bobinot du dévidoir, à l'aide du bras manipulateur,
transférer la bobine du poste de préparation jusque dans la machine de fabrication d'ébauche de pneumatique à l'aide du premier organe de transfert.

Autrement dit, le procédé d'alimentation en produits élastomériques de machines de fabrication d'ébauches de pneumatiques selon l'invention, utilise des moyens partiellement ou complètement automatisés ce qui permet d'éviter l'intervention d'un opérateur pour des opérations répétitives, peu ergonomiques et sans valeur ajoutée. La bobine est préparée de manière à pré-positionner précisément l'intercalaire ainsi que le produit en vue d'un chargement rapide de la bobine dans la machine de fabrication d'ébauches de pneumatiques. Ainsi, les opérations de préparation de la bobine et du dévidoir sur lequel la bobine est chargée sont réalisées en temps masqué, ce qui permet de diminuer le risque d'arrêt de la machine de fabrication, contrairement au procédé de l'état de la technique dans lequel ces opérations sont réalisées par la machine de fabrication.

Avantageusement, le procédé comprend, en amont de l'opération de chargement de la bobine, l'opération suivante :
transférer la bobine d'un stockage vers le poste de préparation à l'aide d'un appareil de manutention autonome appartenant à l'installation d'alimentation.

Ainsi, les opérations de transferts préalables aux opérations de préparation d'une bobine et d'un dévidoir utilisent des moyens automatisés ce qui permet d'éviter l'intervention d'un opérateur. De plus, l'utilisation d'un appareil de manutention autonome améliore la précision des manipulations de charges et permet ainsi de réduire la dégradation et l'usure de l'installation d'alimentation consécutives aux chocs et frictions qui surviennent lorsque la précision des manipulations est insuffisante. Enfin, le transfert des bobines vers le poste de préparation permet de réduire les distances parcourues par l'appareil de manutention et ainsi, d'optimiser l'utilisation de l'appareil de manutention.

De préférence, l'installation d'alimentation comprend un poste d'aboutage, ledit poste d'aboutage comportant un bras manipulateur, le procédé comprenant, en aval de l'opération de transfert de la bobine dans la machine de fabrication de pneumatiques, l'opération suivante :
abouter l'extrémité du produit avec une extrémité résiduelle d'un précédent produit alimentant la machine de fabrication d'ébauches de pneumatiques, à l'aide du bras manipulateur.

Ainsi, les opérations d'aboutage successives aux opérations de préparation d'une bobine et d'un dévidoir utilisent des moyens automatisés, ce qui permet d'éviter l'intervention d'un opérateur lors du déroulement normal des opérations d'aboutage. De plus, si l'intervention d'un opérateur s'avère nécessaire en cas d'incident, l'utilisation d'un bras manipulateur collaboratif améliore l'accessibilité au poste d'aboutage compte tenu de l'absence d'enceinte de sécurité. Enfin, l'opération d'aboutage est facilitée et réalisée plus tôt par rapport au procédé d'aboutage de l'état de la technique grâce à la disposition préalable du produit sur le présentoir du dévidoir.

Avantageusement, le procédé comprend, en aval de l'opération d'aboutage, les opérations successives suivantes :
transférer la bobine depuis la machine de fabrication d'ébauches de pneumatiques au poste de préparation à l'aide de l'organe de transfert,
enrouler l'extrémité du produit disposée sur le présentoir du dévidoir sur la bobine de manière à ce que l'extrémité du produit soit disposée sur le support antiadhésif, et/ou enrouler le support antiadhésif sur la bobine de manière à ce que le support antiadhésif ne soit plus enroulé sur le bobinot, à l'aide du moteur du poste de préparation,
décharger la bobine du dévidoir à l'aide de l'organe de chargement.

Autrement dit, lorsque l'on souhaite évacuer un dévidoir de la machine de fabrication d'ébauche de pneumatique, il est possible de le faire sans attendre d'avoir réalisé les opérations annexes préalables telles que le ré-enroulage de l'intercalaire sur la bobine, contrairement au procédé de l'état de la technique. Ainsi, les opérations annexes à l'évacuation d'une bobine sont réalisées en temps masqué en dehors de la machine de fabrication d'ébauches de pneumatiques.

De préférence, le procédé comprend, en aval de l'opération de déchargement de la bobine, l'opération suivante :
transférer la bobine depuis le poste de préparation jusque dans le stockage à l'aide de l'appareil de manutention.

De préférence, la bobine se trouve dans une position allongée dans le stockage. Le stockage d'une bobine dans une position allongée ou, autrement dit, reposant à plat sur un de ses flasques latéraux, permet de minimiser le fluage du produit lors de son stockage, et ainsi d'améliorer la répartition uniforme du produit lors de la fabrication d'une ébauche de pneumatique.

Avantageusement, la bobine se trouve dans une position redressée pendant l'opération de transfert à l'aide de l'organe de transfert. Le transfert ainsi que les opérations préalables au transfert d'une bobine dans la machine de fabrication d'ébauches de pneumatiques, sont facilitées lorsque la bobine se trouve dans une position redressée ou, autrement dit, lorsque la bobine repose verticalement sur la tranche de ses flasques latéraux.

Avantageusement, l'organe de chargement est agencé sur l'appareil de manutention. Un appareil de manutention muni de moyen de chargement permet de simplifier l'installation d'alimentation en proposant un moyen de transfert et de chargement flexible apte à saisir une bobine sur un stockage en hauteur et à la déposer sur un dévidoir. De plus, un tel appareil permet de réduire l'encombrement de l'installation d'alimentation dans un espace restreint.

L'invention a également pour objet suivant la revendication 9 une installation d'alimentation en produit élastomérique de machines de fabrication d'ébauches de pneumatiques, ledit produit étant disposé sur un support antiadhésif, l'ensemble formé par le produit et le support antiadhésif étant enroulé sur une bobine, ladite installation comprenant un organe de chargement, un poste de préparation, et au moins un organe de transfert apte à transférer la bobine et comportant un dévidoir, sur lequel une bobine est apte à être chargée au moyen de l'organe de chargement, et au moins un moteur apte à entrainer en rotation la bobine chargée sur le dévidoir, ledit dévidoir comportant un bobinot apte à enrouler le support antiadhésif séparé du produit, le poste de préparation et le dévidoir étant distincts de la machine de fabrication d'ébauches de pneumatiques, ladite installation étant caractérisée en ce que le poste de préparation comprend un bras manipulateur apte à manipuler le produit et le support antiadhésif, et en ce que le dévidoir comporte un présentoir apte à supporter une extrémité du produit déroulée de la bobine.

De préférence, l'installation comprend une unité de contrôle, lesdits organe de chargement, poste de préparation et organe de transfert comprenant chacun des moyens de communication avec l'unité de contrôle afin de recevoir de l'unité de contrôle des instructions de missions et à communiquer à l'unité de contrôle des informations d'état de missions.

L'invention sera mieux comprise grâce à la suite de la description, qui s'appuie sur les figures suivantes :
- la figure 1 est une vue de dessus d'une installation d'alimentation en produits élastomériques de machines de fabrication d'ébauches de pneumatiques ;
- la figure 2 est une vue en perspective illustrant une plateforme mobile de l'installation d'alimentation de la figure 1 ;
- la figure 3 est une vue de côté illustrant certains éléments de l'installation d'alimentation de la figure 1 ;
- la figure 4 est un diagramme de définition de bloc illustrant les flux des communications entre certains éléments de l'installation d'alimentation de la figure 1 ;
- la figure 5 est une vue en perspective illustrant notamment un poste de préparation de l'installation d'alimentation de la figure 1 ;
- la figure 6 est un diagramme de définition de bloc illustrant des opérations d'un procédé de transfert de dévidoir ;
- la figure 7 est un diagramme de définition de bloc illustrant des opérations d'un procédé d'alimentation en produit élastomérique.

Sur les différentes figures, les éléments identiques ou similaires portent la même référence. Leur description n'est donc pas systématiquement reprise.

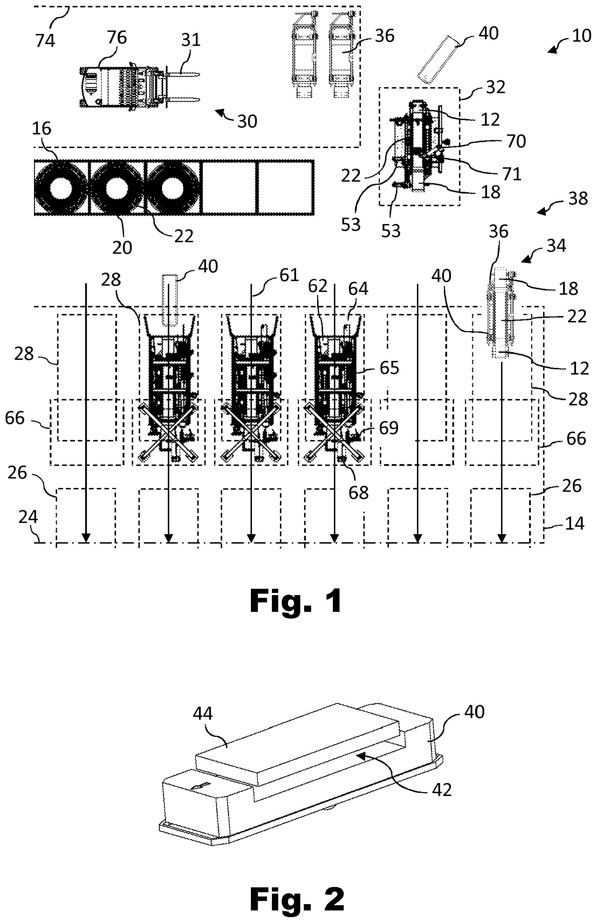

Comme l'illustre la figure 1, l'invention est relative à une installation d'alimentation 10 en produits élastomériques 12 de machines de fabrication 14 d'ébauches de pneumatiques. L'installation d'alimentation est située en aval, dans le sens de déplacement des produits élastomériques, d'un stockage 16 de produits élastomériques et en amont de machines de fabrication d'ébauches de pneumatiques.

Par produit élastomérique 12, on entend un produit comprenant une matrice d'élastomère éventuellement renforcée par des éléments filaires textiles ou métalliques. Le produit 12 est continu et prend la forme d'une nappe, ou encore, d'une ou plusieurs bandes disposées parallèlement les unes aux autres. Le produit est disposé longitudinalement sur un support antiadhésif 18, aussi appelé intercalaire, permettant le stockage et le transport du produit sous la forme d'un enroulement 20. L'ensemble formé par le produit et le support antiadhésif est enroulé sur le moyeu d'une bobine 22. Sur le stockage 16, la bobine est disposée dans une position allongée. Autrement dit, la bobine repose à plat sur un de ses flasques latéraux, et l'enroulement 20 forme un cylindre de révolution d'axe vertical. Une position allongée de la bobine permet une meilleure conservation de la forme du produit 12.

Une machine de fabrication 14 d'ébauches de pneumatique comprend généralement un tambour (non représenté) en forme de cylindre de révolution comprenant un axe de révolution 24 autour duquel le tambour est mobile en rotation et le long duquel le tambour est mobile en translation. La machine de fabrication comprend également au moins un poste de pose 26 et au moins un poste d'alimentation 28 de produits élastomériques 12. Les produits élastomériques sont posés circonférentiellement sur le tambour à l'aide du poste de pose afin de former une ébauche de pneumatique. Chaque produit élastomérique est tiré lors de sa pose depuis le poste d'alimentation. A titre d'exemple, une machine de fabrication d'ébauches de pneumatiques convenant particulièrement bien à la mise en oeuvre de l'installation d'alimentation 10 comprend une pluralité de postes d'alimentation, disposés parallèlement les uns par rapport aux autres, perpendiculairement à l'axe de révolution 24 d'un ou plusieurs tambours.

L'installation d'alimentation 10 comprend notamment un organe de chargement 30, un poste de préparation 32 et au moins un organe de transfert 34 comportant un dévidoir 36. L'organe de transfert appartient également à une installation de transfert 38, et est apte à transférer une bobine 22 du poste de préparation jusqu'à un poste d'alimentation 28 de la machine de fabrication 14 d'ébauches de pneumatiques. A titre d'exemple, une installation d'alimentation comprend trois organes de transfert pour huit postes d'alimentation, et vingt-quatre dévidoirs. L'organe de chargement 30 est apte à charger une bobine 22 sur un dévidoir. Le poste de préparation est notamment apte à enrouler ou dérouler l'ensemble formé par le produit 12 et le support antiadhésif 18.

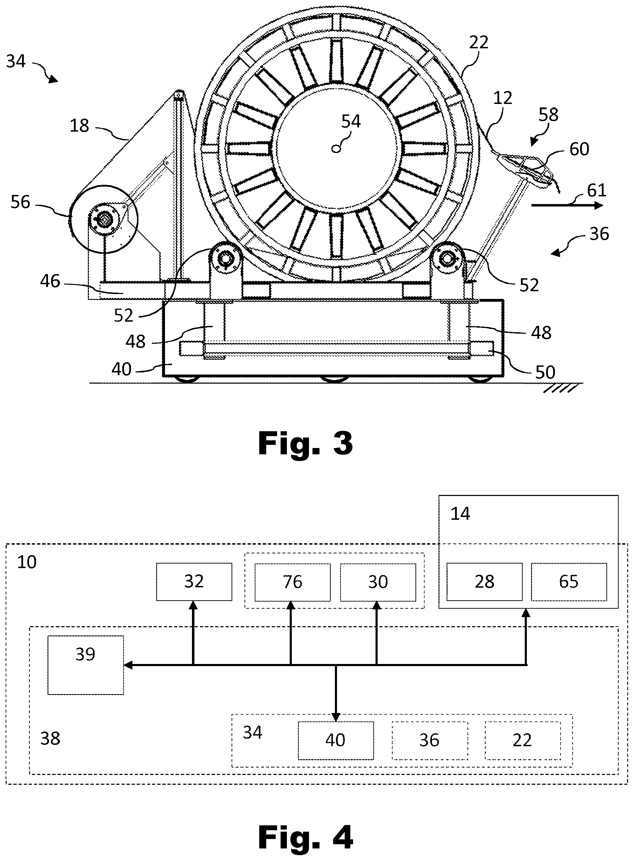

L'installation d'alimentation 10 et l'installation de transfert 38 comprennent une unité de contrôle 39 (figure 4) appartenant à un automate de pilotage d'un atelier dans lequel se trouve une installation d'alimentation en produits élastomériques 12 et des machines de fabrication 14 d'ébauches de pneumatiques. L'installation de transfert comprend en outre des dévidoirs 36 et au moins une plateforme mobile 40 apte à supporter et déplacer un dévidoir. L'ensemble formé par une plateforme mobile et un dévidoir est également appelé un organe de transfert 34 d'une bobine 22.

La plateforme mobile 40 illustrée à la figure 2 est autonome, et est apte à effectuer des missions d'évacuation d'un dévidoir 36 ou d'alimentation en dévidoir de la machine de fabrication 14 d'ébauches de pneumatiques. L'unité de contrôle 39 programme et transmet les instructions de missions aux plateformes mobiles. Par autonome, on entend que la plateforme mobile est capable de se déplacer sans intervention humaine. La plateforme mobile comprend des moyens de guidage et des moyens de communication avec l'unité de contrôle 39, par exemple par wifi. A titre d'exemple, le guidage d'une plateforme mobile autonome peut être du type filoguidage, laserguidage, optoguidage ou encore géoguidage. De préférence, le guidage d'une plateforme mobile autonome est du type laserguidage et utilise des algorithmes du type SLAM permettant à la plateforme de s'adapter à son environnement. Les plateformes mobiles autonomes 40 sont d'usage flexible et ne nécessitent pas d'aménagements d'infrastructures ni de travaux. Ainsi, l'intégration de l'installation de transfert 38 entre le stockage 16 et les machines de fabrication 14 d'ébauches de pneumatiques est facilitée.

Les moyens de guidage de la plateforme mobile 40 comprennent des capteurs tel un radar pour scanner et identifier l'environnement de la plateforme mobile et/ou des centrales inertielles, ou encore des repères magnétiques permettant à la plateforme mobile de se repérer dans son environnement. Les moyens de guidage comprennent en outre un contrôleur à microprocesseurs pour calculer le trajet de la plateforme en fonction de la destination visée dans une instruction de mission transmise à la plateforme mobile par l'unité de contrôle 39, et des données recueillies par les capteurs. La plateforme mobile identifie également les éventuels obstacles ou les personnes présentes dans son environnement et peut décider de calculer le trajet le plus efficace pour les contourner et atteindre sa destination.

La plateforme 40 comprend un dispositif de levage 42 qui coopère avec un contenant tel un dévidoir 36. Le contenant de forme généralement rectangulaire est supporté par quatre appuis et est conçu de manière à ce que, lorsque le contenant repose au sol sur ses appuis et lorsque le dispositif de levage est inactif, la plateforme puisse se positionner sous le contenant. Lorsque la plateforme est positionnée sous un contenant et lorsque le dispositif de levage est actif, le contenant est soulevé par le dispositif de levage de manière à ce que ses quatre appuis ne reposent plus sur le sol. La plateforme mobile est ainsi en mesure de déplacer le contenant. Le dispositif de levage comprend un plateau 44 formant une partie de la surface supérieure de la plateforme et un actionneur (non représenté) tel un vérin ou un pantographe mû par un système vis-écrou.

La plateforme mobile 40 comprend un châssis de forme généralement rectangulaire. Le châssis est supporté par au moins trois roues. A titre d'exemple, le châssis peut comporter quatre ou six roues dont au moins une roue est motrice. De préférence, chaque roue est orientable d'un angle allant jusqu'à 90° pour permettre à la plateforme mobile d'accoster latéralement sa destination, par exemple le poste d'alimentation 28. Ainsi, la plateforme est très manoeuvrable dans un espace restreint. Chaque roue motrice est entrainée par un moteur électrique qui est alimenté par des batteries d'alimentation électrique implantées sur le châssis de la plateforme mobile.

L'installation de transfert comprend une station d'accueil (non illustrée), apte à charger les batteries d'une plateforme mobile 40. Lorsque la plateforme mobile n'est pas en mission d'évacuation ou d'alimentation, la plateforme mobile se déplace jusqu'à la station dans laquelle elle se branche sur une borne de recharge en électricité.

Un dévidoir 36 tel qu'illustré à la figure 3 comprend un châssis 46 de forme généralement rectangulaire. Le châssis est supporté par quatre appuis 48 agencés à chaque angle du châssis. Les appuis du châssis sont reliés par deux guides 50 selon deux côtés opposés du châssis. Un guide a pour fonction de faciliter les déplacements de la plateforme mobile 40 entre les appuis du dévidoir. Un dévidoir comprend en outre deux rouleaux 52 parallèles, chaque rouleau étant monté mobile en rotation par rapport au châssis 46. Les rouleaux ont pour fonction de supporter une bobine 22, et de permettre le déroulage ou l'enroulage du produit élastomérique 12 contenu sur la bobine. Les rouleaux sont actionnés en rotation par au moins un moteur 53 intégré au châssis du dévidoir ou, de préférence, intégré aux postes d'alimentation 28 et de préparation 32 auquel cas le moteur comprend des moyens d'accouplement avec les rouleaux. Le moteur 53 entraine une courroie du dévidoir reliée aux rouleaux permettant ainsi de les entrainer en rotation. Une bobine est disposée dans une position redressée sur le dévidoir. Autrement dit, la bobine repose sur les rouleaux par la tranche de ses flasques latéraux, et la bobine ainsi positionnée est mobile en rotation autour d'un axe horizontal 54.

Un dévidoir comprend également un bobinot 56 et un présentoir 58. Par bobinot, on entend une bobine de petites dimensions par comparaison aux dimensions de la bobine 22 contenant le produit élastomérique 12. Le bobinot a pour fonction de recevoir, autour de son moyeu, le support antiadhésif 18 après que celui-ci ait été séparé du produit élastomérique. Le bobinot 56 est monté mobile en rotation par rapport au châssis 46 parallèlement à l'axe de rotation 54 de la bobine, sur la face arrière du dévidoir ou, autrement dit, à l'opposé du sens de tirage du produit. Le bobinot est entrainé en rotation au moyen d'un moteur 53 de manière à enrouler ou dérouler le support antiadhésif. A titre d'exemple, le moteur est implanté sur le châssis 46 du dévidoir ou, de préférence, intégré aux postes d'alimentation et de préparation auquel cas le moteur 53 comprend des moyens d'accouplement avec les rouleaux. Le présentoir 58 a pour fonction de supporter le produit afin de faciliter sa manutention ultérieure. Le présentoir comprend une tablette 60 disposée sur la face avant du dévidoir ou, autrement dit, dans le sens 61 de tirage du produit.

Un poste d'alimentation 28 comprend un logement 62 et au moins un accès 64 au logement depuis l'extérieur de la machine de fabrication 14 d'ébauche de pneumatiques. L'accès est apte à être emprunté par une plateforme mobile 40 chargée d'un dévidoir 36 ou par une plateforme mobile seule. Le logement est apte à loger et positionner précisément une plateforme mobile chargée d'un dévidoir. De préférence, le poste d'alimentation comprend deux accès, par exemple un premier accès sur la face arrière du poste d'alimentation 28 dans le sens opposé au sens de tirage du produit, et un second accès (non représenté) sur une face latérale du poste d'alimentation. Ainsi, dès qu'une première plateforme mobile 40 a évacué un dévidoir du logement 62 en empruntant le premier accès, une seconde plateforme mobile n'a pas à attendre que la première plateforme mobile libère le premier accès au logement. La seconde plateforme mobile peut immédiatement accéder au logement libre et ainsi, réduire le temps nécessaire au changement d'une bobine. Le logement du poste d'alimentation est formé par une enceinte grillagée et l'accès au logement est formé par une ouverture dans l'enceinte. De préférence, l'installation de transfert comprend des plots de positionnement disposés au sol permettant à la plateforme mobile de se positionner rapidement et de compenser le manque de précision en positionnement d'une plateforme mobile.

Une installation de transfert 38 comprend des moyens d'évaluation de l'état d'une bobine 22. A titre d'exemple, les moyens d'évaluation de l'état d'une bobine peuvent être agencés sur le dévidoir 36, au poste de préparation 32 ou au poste d'alimentions 28. Par état d'une bobine, on entend par exemple l'identifiant ou la localisation de la bobine, la référence, la quantité et le délai de vieillissement du produit contenu sur la bobine ou encore, la température et l'hygrométrie de l'air dans l'environnement de la bobine. Les moyens d'évaluation de l'état d'une bobine permettent d'optimiser la qualité des produits 12 alimentant une machine de fabrication 14 d'ébauches de pneumatiques, le fonctionnement et les moyens nécessaires au fonctionnement de l'installation de transfert 38.

Les moyens d'évaluation de l'état d'une bobine 22 comprennent notamment des moyens de mesure 65 de la quantité de produit 12 contenu sur la bobine. De préférence, les moyens de mesure de la quantité de produit sont agencés sur les machines de fabrication 14 d'ébauches de pneumatiques et lesdits moyens de communication sont confondus avec des moyens de communication desdites machines de fabrication. La mesure de la quantité de produit enroulé sur des bobines supportées par des dévidoirs 36 alimentant les machines de fabrication 14 permet d'anticiper les instructions de mission transmises aux plateformes mobiles 40 en vue du changement d'une bobine et ainsi, de minimiser l'emploi et le nombre des plateformes mobiles.

L'unité de contrôle 39 détermine le moment auquel transmettre une instruction de mission d'évacuation ou d'alimentation à une plateforme mobile 40 de manière à ce que, la plateforme mobile soit positionnée sous le dévidoir 36 destiné à être évacué d'une machine de fabrication 14 avant le ou au moment où le dévidoir doit être évacué, et/ou de manière à ce que le dévidoir destiné à alimenter une machine de fabrication d'ébauches de pneumatiques soit positionné à proximité immédiate de ladite machine de fabrication d'ébauches de pneumatiques au moyen d'une plateforme mobile, avant le ou au moment où le dévidoir doit être transféré dans la machine de fabrication d'ébauches de pneumatiques.

A titre d'exemple, les moyens de mesure prennent la forme d'un télémètre apte à mesurer la distance le séparant de l'enroulement permettant ainsi de connaitre le diamètre de l'enroulement 20. La connaissance du diamètre de l'enroulement donne une connaissance approximative de la longueur de produit contenu sur la bobine à plus ou moins le périmètre de l'enroulement à un instant donné. Le télémètre est, de préférence, associé à un codeur rotatif permettant de connaitre la position angulaire de la bobine sur le dévidoir. L'association des mesures du télémètre et du codeur permet d'affiner la connaissance de la longueur de produit contenu sur la bobine. Le télémètre et le codeur sont agencés sur le poste de préparation 28 et relié au contrôleur de la machine de fabrication 14.

Le dévidoir 36 comprend également des moyens de localisation dudit dévidoir, tel un capteur de type GPS ou, de préférence, une balise Bluetooth. Une balise Bluetooth transmet son identifiant à un récepteur appartenant à l'installation de transfert 38, et communique avec l'unité de contrôle 39. L'unité de contrôle est ainsi en mesure de répertorier les déplacements des dévidoirs en vue de déterminer et programmer des instructions de missions optimisées. La connaissance des déplacements des dévidoirs permet également d'optimiser le positionnement des différents éléments d'une installation d'alimentation 10 en produits élastomériques 12 et/ou de transfert de dévidoir.

Une machine de fabrication 14 d'ébauches de pneumatiques comprend en outre un poste d'aboutage 66 situé en aval du poste d'alimentation 28 et en amont du poste de pose 26. Le poste d'aboutage a pour fonction d'abouter automatiquement l'extrémité du produit 12 déroulé d'une bobine 22 au poste d'alimentation, avec l'extrémité résiduelle d'un précédent produit alimentant la machine de fabrication d'ébauches de pneumatiques. A cette fin, le poste d'aboutage comprend un bras manipulateur 68 collaboratif. Par bras manipulateur, on entend un bras manipulateur automatisé du type anthropomorphe à six axes, formé d'une série de tronçons articulés les uns aux autres. Par bras manipulateur collaboratif, on entend un bras manipulateur apte à collaborer avec un opérateur sans enceinte de sécurité. Le bras manipulateur collaboratif comporte des capteurs de force ou de proximité agissant sur ledit bras détectant l'approche d'un opérateur ou d'un objet. De plus, le bras manipulateur collaboratif est limité en vitesse et en force afin de réduire la gravité d'une collision avec un opérateur. Le segment en extrémité libre du bras manipulateur comprend un effecteur 69, par exemple une pince, apte à découper le produit élastomérique 12 de manière à ce que les extrémités à abouter présentent des sections régulières, et apte à agencer puis comprimer l'une sur l'autre lesdites extrémités de manière à les solidariser.

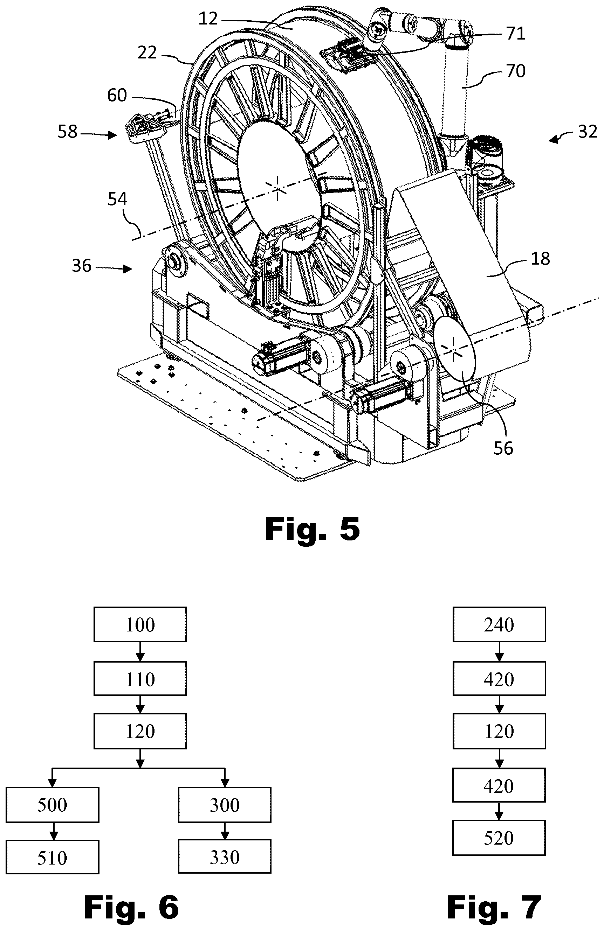

Comme illustré aux figures 1 et 5, le poste de préparation 32 est situé en amont du stockage 16 et en aval des machines de fabrication 14 d'ébauches de pneumatiques, dans le sens de circulation des produits élastomériques 12. Le poste de préparation comprend un bras manipulateur collaboratif 70. Le segment en extrémité libre du bras manipulateur comprend un effecteur 71, par exemple une pince, apte à agencer l'extrémité du produit et l'extrémité du support antiadhésif 18 de manière à ce que l'extrémité du produit soit disposée sur le présentoir 58 du dévidoir 36 et à ce que l'extrémité du support antiadhésif soit enroulée sur un bobinot 56 du dévidoir.

L'organe de chargement 30 est situé sur une aire de chargement 74 et est apte à charger une bobine 22 sur un dévidoir 36. A titre d'exemple, l'organe de chargement prend la forme d'un bras manipulateur muni d'une pince apte à manipuler une bobine ou, de préférence, de fourches rotatives 31 agencées sur un appareil de manutention 76. L'appareil de manutention est, de préférence, du type chariot élévateur autonome. Les fourches rotatives agencées sur le chariot élévateur autonome permettent de saisir une bobine sur le stockage 16, de la pivoter d'une position allongée à une position redressée et de la disposer sur les rouleaux 52 d'un dévidoir. Le chariot élévateur autonome est apte à transférer automatiquement une bobine entre le stockage et un dévidoir sans l'intervention d'un opérateur. L'appareil de manutention comprend des moyens de communication avec l'unité de contrôle 39 afin de recevoir des instructions de missions de transfert et de manipulation d'une bobine, et afin de transmettre des données d'état, tel que la position de l'appareil de manutention ou l'état d'avancement des missions de transfert et de manipulation d'une bobine.

On a illustré aux figures 6 et 7 un procédé d'alimentation en produits élastomériques 12 de machines de fabrication 14 d'ébauches de pneumatiques, et un procédé de transfert de dévidoirs 36 pour l'alimentation en produits élastomériques de machines de fabrication d'ébauches de pneumatiques.

On mesure 100 la quantité de produit enroulé sur des bobines 22 supportées par des dévidoirs 36 alimentant les machines de fabrication 14 d'ébauches de pneumatiques, à l'aide des moyens d'évaluation de chaque dévidoir, et on communique 110 les données mesurées à une unité de contrôle 39 à l'aide des moyens de communication de la machine de fabrication 14.

En fonction des données mesurées, on détermine 120 à l'aide de l'unité de contrôle 39 le moment auquel transmettre une instruction de mission d'évacuation ou d'alimentation à une plateforme mobile de manière à ce que, la plateforme mobile soit positionnée sous le dévidoir destiné à être évacué d'une machine de fabrication d'ébauches de pneumatiques avant le ou au moment où le dévidoir doit être évacué, et/ou de manière à ce que le dévidoir destiné à alimenter une machine de fabrication d'ébauches de pneumatiques soit positionné à proximité immédiate de ladite machine de fabrication d'ébauches de pneumatiques au moyen d'une plateforme mobile, avant le ou au moment où le dévidoir doit être transféré dans la machine de fabrication d'ébauches de pneumatiques.

On transmet 200 une instruction de mission à un appareil de manutention autonome 76 à l'aide d'une unité de contrôle 39. On saisit 210 une bobine 22 sur un stockage 16 à l'aide de l'organe de chargement 30. On pivote 220 la bobine d'une position allongée à une position redressée à l'aide des fourches rotatives de l'organe de chargement 30. On transfère 230 la bobine 22 du stockage 16 jusque dans un dévidoir 36 à l'aide de l'appareil de manutention 76 sur lequel les fourches rotatives sont agencées. On dépose 240 la bobine sur les rouleaux 52 du dévidoir à l'aide de l'organe de chargement 30. On transmet 250 à l'unité de contrôle 39 des données concernant l'état d'avancement de la mission à l'aide des moyens de communication de l'appareil de manutention 76.

On transmet 300 une instruction de mission à une plateforme mobile 40 disponible à l'aide de l'unité de contrôle 39. On déplace 310 la plateforme mobile jusqu'au dévidoir 36 sur lequel une bobine 22 a été chargée et on soulève 320 le dévidoir à l'aide d'un dispositif de levage 42 de la plateforme mobile. On déplace 330 ensuite la plateforme mobile jusqu'à un poste de préparation 32.

On s'accouple 400 aux rouleaux 52 du dévidoir 36 puis on les entraine 410 en rotation à l'aide d'un moteur appartenant au poste de préparation 32, entrainant en rotation par la même occasion la bobine 22. On déroule et/ou positionne 420 l'ensemble formé par le produit 12 et le support antiadhésif de manière à ce que le bras manipulateur 70 du poste de préparation soit en mesure de saisir l'extrémité du produit et/ou l'extrémité du support antiadhésif. On agence 430 l'extrémité du support antiadhésif à l'aide du bras manipulateur de manière à la disposer sur un bobinot 56 du dévidoir, et on agence 440 l'extrémité du produit de manière à la disposer sur la tablette 60 d'un présentoir 58.

On transmet 500 une instruction de mission d'évacuation ou d'alimentation d'un dévidoir 36 à une plateforme mobile 40 à l'aide de l'unité de contrôle 39. On déplace 510 la plateforme mobile de manière à ce qu'elle se positionne sous le dévidoir 36 destiné à être évacué d'une machine de fabrication d'ébauches de pneumatiques, ou on déplace 520 la plateforme mobile supportant le dévidoir destiné à alimenter une machine de fabrication d'ébauches de pneumatiques de manière à ce qu'elle se positionne à proximité immédiate du poste d'alimentation 28 de la machine de fabrication 14 d'ébauches de pneumatiques.

On déplace 600 une première plateforme mobile 40 supportant un premier dévidoir 36 destiné à alimenter une machine de fabrication 14 d'ébauches de pneumatiques jusqu'à une position adjacente à un premier accès 54 appartenant à une machine de fabrication 14 d'ébauches de pneumatiques. On déplace 610 une seconde plateforme supportant un second dévidoir au travers d'un second accès appartenant à une machine de fabrication 14 d'ébauches de pneumatiques de manière à évacuer le second dévidoir du logement. On déplace 620 la première plateforme mobile au travers du premier accès, et on loge 630 le premier dévidoir dans le logement.

On accouple 700 un moteur du poste d'alimentation 28 aux rouleaux 52 du dévidoir 36 supportant la bobine 22 destinée à alimenter une machine de fabrication 14 d'ébauches de pneumatiques et on entraine en rotation la bobine. On aboute 710 automatiquement l'extrémité du produit avec une extrémité résiduelle d'un précédent produit alimentant la machine de fabrication d'ébauches de pneumatiques, à l'aide du bras manipulateur 68 d'un poste d'aboutage 66.

Lorsque la bobine 22 doit être évacuée du poste d'alimentation 28, on transfère 800 la bobine depuis la machine de fabrication 14 d'ébauches de pneumatiques jusqu'au poste de préparation 32 à l'aide d'une plateforme mobile 40. On enroule 810 sur la bobine l'extrémité du produit élastomérique 12 disposée sur le présentoir 58 du dévidoir 36 de manière à ce que l'extrémité du produit soit disposée sur le support antiadhésif 18, et/ou on enroule 820 le support antiadhésif sur la bobine de manière à ce que le support antiadhésif ne soit plus enroulé sur le bobinot 58, à l'aide du moteur du poste de préparation.

De préférence, on positionne 830 en vis-à-vis par leur face avant deux dévidoirs 36 supportant des bobines 22 qui comportent un produit élastomérique 12 de référence identique. On aboute 840 les extrémités des produits disposées sur le présentoir 58 des dévidoirs à l'aide du bras manipulateur 70. On enroule 850 le produit d'un des dévidoirs sur l'autre dévidoir en vis-à-vis.

On décharge 900 la bobine du dévidoir à l'aide de l'organe de chargement. On transfère 910 automatiquement la bobine depuis le poste de préparation jusque dans le stockage à l'aide de l'appareil de manutention.

On scanne l'environnement de la machine de fabrication d'ébauches de pneumatiques à l'aide du radar d'une plateforme mobile 40. On identifie la machine de fabrication d'ébauches de pneumatiques dans l'environnement à l'aide du contrôleur de la plateforme mobile. On contourne les obstacles identifiés lors du déplacement de la plateforme mobile.

Après avoir reçu une information d'achèvement de mission d'alimentation ou d'évacuation par une plateforme mobile 40, on transmet à la plateforme mobile une instruction pour commencer une nouvelle mission d'alimentation ou d'évacuation, à l'aide de l'unité de contrôle 39. Après que la plateforme mobile ait vérifié le niveau de ses batteries, on commence une nouvelle mission d'alimentation ou d'évacuation. Dès que le niveau de ses batteries est descendu en dessous d'une limite prédéterminée, on déplace une plateforme mobile jusqu'à la station d'accueil.

## Revendications

1. Procédé d'alimentation en produits élastomériques (12) de machines de fabrication (14) d'ébauches de pneumatiques au moyen d'une installation d'alimentation (10), chaque produit étant disposé sur un support antiadhésif (18), l'ensemble formé par le produit et le support antiadhésif étant enroulé sur une bobine (22), ladite installation comprenant un organe de chargement (30) et au moins un organe de transfert (34) comportant un dévidoir (36), le procédé étant **caractérisé en ce que** l'installation d'alimentation comprend un poste de préparation (32), ledit poste de préparation comprenant un bras manipulateur (70) apte à manipuler le produit et le support antiadhésif, et au moins un moteur (53) apte à entrainer en rotation la bobine chargée sur le dévidoir, le poste de préparation et le dévidoir étant distincts de la machine de fabrication d'ébauches de pneumatiques, le procédé comprenant les opérations successives suivantes :
charger (240) la bobine sur le dévidoir à l'aide de l'organe de chargement,
positionner (420) l'extrémité de l'ensemble enroulé sur la bobine à l'aide du moteur du poste de préparation,
agencer (430, 440) l'extrémité du produit et l'extrémité du support antiadhésif de manière à ce que l'extrémité du produit soit disposée sur un présentoir (58) du dévidoir et à ce que l'extrémité du support antiadhésif soit enroulée sur un bobinot (56) du dévidoir, à l'aide du bras manipulateur,
transférer (520) la bobine du poste de préparation jusque dans la machine de fabrication d'ébauche de pneumatique à l'aide du premier organe de transfert.

2. Procédé selon la revendication précédente comprenant, en amont de l'opération de chargement de la bobine, l'opération suivante :
transférer la bobine d'un stockage (16) vers le poste de préparation (32) à l'aide d'un appareil de manutention autonome (76) appartenant à l'installation d'alimentation.

3. Procédé selon l'une des revendications précédentes dans lequel l'installation d'alimentation comprend un poste d'aboutage (66), ledit poste d'aboutage comportant un bras manipulateur collaboratif (68), le procédé comprenant, en aval de l'opération de transfert de la bobine (22) dans la machine de fabrication de pneumatiques, l'opération suivante :
abouter l'extrémité du produit avec une extrémité résiduelle d'un précédent produit alimentant la machine de fabrication d'ébauches de pneumatiques, à l'aide du bras manipulateur.

4. Procédé selon la revendication précédente comprenant, en aval de l'opération d'aboutage, les opérations successives suivantes :
transférer la bobine depuis la machine de fabrication d'ébauches de pneumatiques au poste de préparation (32) à l'aide de l'organe de transfert,
enrouler sur la bobine (22) l'extrémité du produit disposée sur le présentoir du dévidoir de manière à ce que l'extrémité du produit soit disposée sur le support antiadhésif, et/ou enrouler le support antiadhésif sur la bobine de manière à ce que le support antiadhésif ne soit plus enroulé sur le bobinot, à l'aide du moteur (53) du poste de préparation,
décharger la bobine du dévidoir à l'aide de l'organe de chargement (30).

5. Procédé selon la revendication précédente comprenant, en aval de l'opération de déchargement de la bobine, l'opération suivante :
transférer la bobine depuis le poste de préparation jusque dans le stockage (16) à l'aide de l'appareil de manutention.

6. Procédé selon l'une des revendications 2 à 5 dans lequel la bobine se trouve dans une position allongée dans le stockage.

7. Procédé selon l'une des revendications 1 à 6 dans lequel la bobine (22) se trouve dans une position redressée pendant l'opération de transfert à l'aide de l'organe de transfert (34).

8. Procédé selon l'une des revendications 2 à 7 dans lequel l'organe de chargement (30) est agencé sur l'appareil de manutention (76).

9. Installation d'alimentation (10) en produit élastomérique (12) de machines de fabrication d'ébauches de pneumatiques (14), ledit produit étant disposé sur un support antiadhésif (18), l'ensemble formé par le produit et le support antiadhésif étant enroulé sur une bobine (22), ladite installation comprenant un organe de chargement (30), un poste de préparation (32), et au moins un organe de transfert (34) apte à transférer la bobine et comportant un dévidoir (36) sur lequel une bobine est apte à être chargée au moyen de l'organe de chargement, et au moins un moteur (53) apte à entrainer en rotation la bobine chargée sur le dévidoir, ledit dévidoir comportant un bobinot (56) apte à enrouler le support antiadhésif séparé du produit, le poste de préparation et le dévidoir étant distincts de la machine de fabrication d'ébauches de pneumatiques,
ladite installation étant **caractérisée en ce que** le poste de préparation (32) comprend un bras manipulateur (70) apte à manipuler le produit et le support antiadhésif,
et **en ce que** le dévidoir (36) comporte un présentoir (58) apte à supporter une extrémité du produit déroulée de la bobine.

10. Installation selon la revendication précédente qui comprend une unité de contrôle (39), lesdits organe de chargement (30), poste de préparation (32) et organe de transfert (34) comprenant chacun des moyens de communication avec l'unité de contrôle afin de recevoir de l'unité de contrôle des instructions de missions et à communiquer à l'unité de contrôle des informations d'état de missions.

## Patentansprüche

1. Verfahren zum Beschicken von Maschinen (14) zur Herstellung von Reifenrohlingen mit elastomeren Produkten (12) mithilfe einer Beschickungsanlage (10), wobei jedes Produkt auf einem Trennträger (18) angeordnet ist, wobei die durch das Produkt und den Trennträger gebildete Einheit auf eine Spule (22) aufgewickelt ist, wobei die Anlage ein Ladeorgan (30) und mindestens ein Überführungsorgan (34) mit einem Abroller (36) umfasst, wobei das Verfahren **dadurch gekennzeichnet ist, dass** die Beschickungsanlage eine Vorbereitungsstation (32) umfasst, wobei die Vorbereitungsstation einen Manipulatorarm (70) umfasst, der dazu in der Lage ist, das Produkt und den Trennträger zu handhaben, und mindestens einen Motor (53), der dazu in der Lage ist, die auf den Abroller geladenen Spule zu drehen, wobei die Vorbereitungsstation und der Abroller von der Maschine zur Herstellung von Reifenrohlingen getrennt sind, wobei das Verfahren die folgenden aufeinanderfolgenden Schritte umfasst:
Laden (240) der Spule mithilfe des Ladeorgans auf den Abroller,
Positionieren (420) des Endes der auf die Spule aufgewickelten Einheit mithilfe des Motors der Vorbereitungsstation,
mithilfe des Manipulatorarms Anordnen (430, 440) des Endes des Produkts und des Endes des Trennträgers, so dass das Ende des Produkts auf einem Ständer (58) des Abrollers angeordnet ist und dass das Ende des Trennträgers auf eine Spulenhülse (56) des Abrollers aufgewickelt wird,
Überführen (520) der Spule von der Vorbereitungsstation bis zur Maschine zur Herstellung von Reifenrohlingen mithilfe des ersten Überführungsorgans.

2. Verfahren nach dem vorangehenden Anspruch, das vor dem Vorgang des Ladens der Spule den folgenden Vorgang umfasst:
Überführen der Spule von einem Lager (16) zur Vorbereitungsstation (32) mithilfe eines autonomen Handhabungsgeräts (76), das zur Beschickungsanlage gehört.

3. Verfahren nach einem der vorangehenden Ansprüche, wobei die Beschickungsanlage eine Anfügestation (66) umfasst, wobei die Anfügestation einen kollaborativen Manipulatorarm (68) aufweist, wobei das Verfahren nach dem Vorgang des Überführens der Spule (22) in die Maschine zur Herstellung von Reifen den folgenden Vorgang umfasst:
Anfügen des Endes des Produkts an ein Restende eines vorherigen Produkts, mit dem die Maschine zur Herstellung von Reifenrohlingen beschickt wird, mithilfe des Manipulatorarms.

4. Verfahren nach dem vorangehenden Anspruch, das nach dem Vorgang des Anfügens die folgenden aufeinanderfolgenden Vorgänge umfasst:
Überführen der Spule von der Maschine zur Herstellung von Reifenrohlingen zur Vorbereitungsstation (32) mithilfe des Überführungsorgans,
mithilfe des Motors (53) der Vorbereitungsstation Aufwickeln des auf dem Ständer des Abrollers angeordneten Produktendes auf die Spule (22), so dass das Produktende auf dem Trennträger angeordnet ist, und/oder Aufwickeln des Trennträgers auf die Spule, so dass der Trennträger nicht mehr auf die Spulenhülse gewickelt ist,
Entladen der Spule vom Abroller mithilfe des Ladeorgans (30).

5. Verfahren nach dem vorangehenden Anspruch, das nach dem Vorgang des Entladens der Spule den folgenden Vorgang umfasst:
Überführen der Spule von der Vorbereitungsstation in das Lager (16) mithilfe des Handhabungsgeräts.

6. Verfahren nach einem der Ansprüche 2 bis 5, wobei sich die Spule im Lager in einer liegenden Position befindet.

7. Verfahren nach einem der Ansprüche 1 bis 6, wobei sich die Spule (22) während des Überführungsvorgangs mithilfe des Überführungsorgans (34) in einer aufgerichteten Position befindet.

8. Verfahren nach einem der Ansprüche 2 bis 7, wobei das Ladeorgan (30) am Handhabungsgerät (76) angeordnet ist.

9. Anlage zur Beschickung (10) von Maschinen zur Herstellung von Reifenrohlingen (14) mit einem elastomeren Produkt (12), wobei das Produkt auf einem Trennträger (18) angeordnet ist, wobei die durch das Produkt und den Trennträger gebildete Einheit auf eine Spule (22) aufgewickelt ist, wobei die Anlage Folgendes umfasst: ein Ladeorgan (30), eine Vorbereitungsstation (32) und mindestens ein Überführungsorgan (34), das dazu in der Lage ist, die Spule zu überführen, und einen Abroller (36) aufweist, auf den die Spule mithilfe des Ladeorgans geladen werden kann, und mindestens einen Motor (53), der dazu in der Lage ist, die auf den Abroller geladene Spule zu drehen, wobei der Abroller eine Spulenhülse (56) aufweist, die dazu in der Lage ist, den vom Produkt getrennten Trennträger aufzuwickeln, wobei die Vorbereitungsstation und der Abroller von der Maschine zur Herstellung von Reifenrohlingen getrennt sind, wobei die Anlage **dadurch gekennzeichnet ist, dass** die Vorbereitungsstation (32) einen Manipulatorarm (70) umfasst, der dazu in der Lage ist, das Produkt und den Trennträger zu handhaben,
und dass der Abroller (36) einen Ständer (58) aufweist, der dazu in der Lage ist, ein von der Spule abgewickeltes Ende des Produkts zu tragen.

10. Anlage nach dem vorangehenden Anspruch, umfassend eine Steuereinheit (39), wobei das Ladeorgan (30), die Vorbereitungsstation (32) und das Überführungsorgan (34) jeweils Mittel zur Kommunikation mit der Steuereinheit umfassen, um Aufgabenbefehle von der Steuereinheit zu empfangen und Informationen über den Aufgabenstatus an die Steuereinheit zu senden.

## Claims

1. Method for supplying green tyre manufacturing machines (14) with elastomeric products (12) by means of a supply facility (10), each product being arranged on a non-stick backing (18), the assembly made up of the product and the non-stick backing being wound onto a reel (22), said facility comprising a loading member (30) and at least one transfer member (34) comprising a unwinder (36), the method being **characterized in that** the supply facility comprises a preparation station (32), said preparation station comprising a manipulator arm (70) able to manipulate the product and the non-stick backing, and at least one motor (53) able to drive the rotation of the reel loaded onto the unwinder, the preparation station and the unwinder being distinct from the green tyre manufacturing machine, the method comprising the following successive operations:
loading (240) the reel onto the unwinder using the loading member,
positioning (420) the end of the assembly wound on the reel using the motor of the preparation station,
arranging (430, 440) the end of the product and the end of the non-stick backing in such a way that the end of the product is laid on a dispenser (58) of the unwinder and that the end of the non-stick backing is wound onto a bobbin (56) of the unwinder, using the manipulator arm,
transferring (520) the reel from the preparation station to the green tyre manufacturing machine, using the first transfer member.

2. Method according to the preceding claim, comprising, upstream of the operation of loading the reel, the following operation:
transferring the reel from a storage area (16) to the preparation station (32) using an autonomous handling apparatus (76) belonging to the supply facility.

3. Method according to one of the preceding claims, wherein the supply facility comprises a joining station (66), said joining station comprising a collaborative manipulator arm (68), the method comprising, downstream of the operation of transferring the reel (22) into the green tyre manufacturing machine, the following operation:
joining the end of the product to a residual end of a previous product supplying the green tyre manufacturing machine, using the manipulator arm.

4. Method according to the preceding claim, comprising, downstream of the joining operation, the following successive operations:
transferring the reel from the green tyre manufacturing machine to the preparation station (32), using the transfer member,
winding onto the reel (22) the end of the product that is presented on the dispenser of the unwinder in such a way that the end of the product is laid down onto the non-stick backing, and/or winding the non-stick backing onto the reel in such a way that the non-stick backing is no longer wound onto the bobbin, using the motor (53) of the preparation station,
unloading the reel from the unwinder using the loading member (30).

5. Method according to the preceding claim, comprising, downstream of the operation of unloading the reel, the following operation:
transferring the reel from the preparation station to the storage area (16) using the handling apparatus.

6. Method according to one of Claims 2 to 5, wherein the reel is in a lying-down position in the storage area.

7. Method according to one of Claims 1 to 6, wherein the reel (22) is in an upright position during the transfer operation using the transfer member (34).

8. Method according to one of Claims 2 to 7, wherein the loading member (30) is arranged on the handling apparatus (76).

9. Facility (10) for supplying green tyre manufacturing machines (14) with elastomeric product (12), said product being arranged on a non-stick backing (18), the assembly made up of the product and the non-stick backing being wound onto a reel (22), said facility comprising a loading member (30), a preparation station (32) and at least one transfer member (34) capable of transferring the reel and comprising a unwinder (36) onto which a reel can be loaded by means of the loading member, and at least one motor (53) able to drive the rotation of the reel loaded onto the unwinder, said unwinder comprising a bobbin (56) able to wind on the non-stick backing separated from the product, the preparation station and the unwinder being distinct from the green tyre manufacturing machine, the said facility being **characterized in that** the preparation station comprises a manipulator arm (70) able to manipulate the product and the non-stick backing, and **in that** the unwinder comprises a dispenser (58) able to support an end of the product which has been unwound from the reel.

10. Facility according to the preceding claim, comprising a control unit (39), said loading member (30), said preparation station (32) and said transfer member (34) each comprising means of communication with the control unit so as to receive mission instructions from the control unit and so as to communicate mission status information to the control unit.
